# EUROPEAN PATENT APPLICATION

(11) **EP 4 428 764 A1**
(43) Date of publication of application: **11.09.2024**
(21) Application number: 22887065.5
(22) Date of filing: 26.10.2022
(51) Int. Cl.: G06N 10/00

(54) **QUANTUM COMPUTER CONTROL DEVICE**

(30) Priority: 01.11.2021 JP 2021179002
(71) Applicant: OSAKA UNIVERSITY, Suita-shi Osaka 565-0871 (JP); Quel, Inc., Hachioji-shi, Tokyo 192-0045 (JP)
(72) Inventor: NEGORO Makoto, Suita-shi, Osaka 565-0871 (JP); MORISAKA Shinichi, Suita-shi, Osaka 565-0871 (JP); SHIOMI Hidehisa, Suita-shi, Osaka 565-0871 (JP); MIYOSHI Takefumi, Hachioji-shi, Tokyo 192-0045 (JP); KOIKE Keisuke, Hachioji-shi, Tokyo 192-0045 (JP)
(74) Representative: Leinweber & Zimmermann
(86) International application number: PCT/JP2022/039940
(87) International publication number: WO 2023/074740

(57) **Abstract**

Provided is a quantum computer controller having exceptional usability, scalability, robustness and other such aspects. A controller 110 of a quantum computer 100 includes a server 130 configured to calculate a waveform signal for manipulating a qubit system 120 having a plurality of qubits, and a plurality of signal processing units 140-1 to 140-N each configured to generate, based on the waveform signal, an electromagnetic wave signal with which the qubit system is irradiated. Each signal processing unit includes a logic device that performs digital signal processing on the waveform signal to generate a baseband signal, a digital oscillator that generates an oscillation signal, a mixer that mixes the baseband signal and the oscillation signal to output a mixed signal, a DA converter that performs a DA conversion on the mixed signal to obtain an analog signal, an RF circuit that generates the electromagnetic wave signal from the analog signal, and an AD converter that performs an AD conversion on an input signal from the RF circuit.

## Description

### Technical Field

The present invention relates to a quantum computer controller.

### Background Art

In recent years, research on quantum computers that perform computations by exploiting quantum mechanical phenomena has attracted great attention. For implementation of quantum computers, it is vital to manipulate qubits with high accuracy, and a variety of techniques on manipulation in quantum computers have been proposed (For example, see Patent Literature 1, Patent Literature 2, Non-Patent Literature 1, and Non-Patent Literature 2). Superconducting qubits, which are current mainstream of quantum computers, are manipulated by microwave pulses.

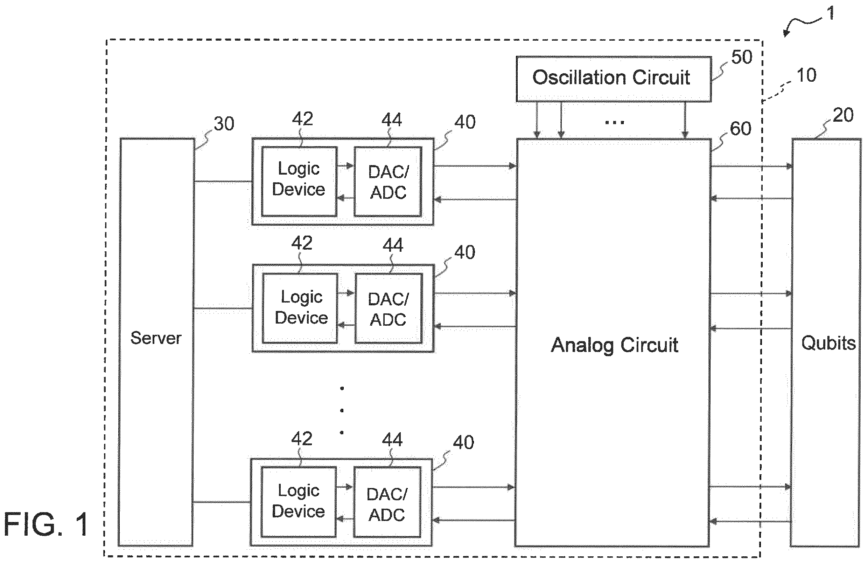

FIG. 1 shows a typical configuration of a conventional quantum computer. The conventional quantum computer 1 includes a controller 10 and a qubit system 20 having a plurality of qubits. The controller 10 includes a server 30, a plurality of baseband circuits 40, an oscillation circuit 50, and an analog circuit 60.

The server 30 calculates a waveform signal required for state manipulation of the qubits of the qubit system 20 or for readout from the qubit system 20, and analyzes an input signal from each of the baseband circuits 40. Each of the baseband circuits 40 includes: a logic device 42 that performs digital signal processing on the waveform signal calculated by the server 30 to generate a baseband signal, and performs timing control; and a digital-analog converter/analog-digital converter (DAC/ADC) 44 that performs conversion between an analog signal and a digital signal. For example, the logic device 42 is a programmable logic device such as a field programmable gate array (FPGA) on which a memory such as a dynamic random access memory (DRAM) is mounted.

The oscillation circuit 50 is provided with a plurality of oscillators that generate microwaves as carrier waves. The analog circuit 60 is connected to each of the baseband circuits 40, the oscillation circuit 50, and the qubit system 20, and generates a radio-frequency signal by performing mixing, combining, and other processing on input analog signals. Since the qubits of the qubit system 20 need to be irradiated with microwave pulses with a plurality of frequencies, the analog circuit 60 has an intricate structure involving components such as mixers, dividers, and combiners.

### Citation List

### Patent Literature

Patent Literature 1: US Patent Application publication No. 2019/0049495
Patent Literature 2: US Patent Application publication No. 2020/0065696

### Non-Patent Literature

Non-Patent Literature 1: Colm A. Ryan, Blake R. Johnson, Diego Riste, Brian Donovan, Thomas A. Ohki, "Hardware for Dynamic Quantum Computing," Review of Scientific Instruments 88 (10), 104703 (2017)
Non-Patent Literature 2: Yilun Xu, Gang Huang, Jan Balewski, Ravi Naik, Alexis Morvan, Bradley Mitchell, Kasra Nowrouzi, David I. Santiago, Irfan Siddiqi, "QubiC: An open source FPGA-based control and measurement system for superconducting quantum information processors," IEEE Transactions on Quantum Engineering, vol. 2, pp. 1-11, 2021, Art no. 6003811

### Summary of Invention

### Technical Problem

Unfortunately, because the baseband circuits 40, the oscillation circuit 50, and the analog circuit 60 of the controller 10 of the conventional quantum computer 1 are separately provided, it is difficult to perform a calibration, leading to low usability. Furthermore, because the analog circuit 60 exclusively generates the radio-frequency signal, an increase in the number of qubits of the qubit system 20 requires an enlargement of size of the analog circuit 60, leading to low scalability. In addition, the analog circuit 60 performs the mixing and combining of the input signals by an analog method, and such an analog-based circuit configuration further brings disadvantages in terms of robustness and configurability.

The invention has been made in view of the foregoing, and an object of the invention is to provide a quantum computer controller having exceptional usability, scalability, robustness and other such aspects.

### Solution to Problem

A quantum computer controller according to the invention includes: a server configured to calculate a waveform signal for manipulation of a qubit system having a plurality of qubits or for readout from the qubit system; and a plurality of signal processing units each configured to generate, based on the waveform signal, an electromagnetic wave signal with which the qubit system is irradiated. Each of the plurality of signal processing units includes: a logic device configured to perform digital signal processing on the waveform signal to generate a baseband signal; one or a plurality of digital oscillators each configured to generate a digital oscillation signal in a given frequency band; one or a plurality of mixers each configured to mix and up-convert the baseband signal and the digital oscillation signal to output one or a plurality of mixed signals; a digital-analog converter configured to perform a digital-analog conversion on the one or the plurality of mixed signals to obtain an analog signal; a radio-frequency circuit configured to generate the electromagnetic wave signal from the analog signal; and an analog-digital converter configured to perform an analog-digital conversion on an input signal from the radio-frequency circuit to obtain a digital signal.

### Advantageous Effects of Invention

With the quantum computer controller according to the invention, each of the plurality of signal processing units has the functions of generating a baseband signal, performing a digital-analog conversion, performing an analog-digital conversion, generating an oscillation signal, mixing, and generating an electromagnetic wave signal. With this feature, it is possible to improve usability, and it is easy to adapt to the scale of a qubit system, thereby improving scalability. Furthermore, the baseband signal is mixed digitally, which makes it possible to enhance robustness.

### Brief Description of Drawings

FIG. 1 is a block diagram of a configuration of a conventional quantum computer.
FIG. 2 is a block diagram of a configuration of a quantum computer according to embodiments of the invention.
FIG. 3 is a schematic diagram of a circuit configuration of each signal processing unit.
FIG. 4A is a schematic diagram of a partial circuit configuration within a DAC unit.
FIG. 4B is a configuration diagram of an up converter of a radio-frequency circuit.
FIG. 4C is a configuration diagram of a down converter of a feedback circuit.
FIG. 4D is a configuration diagram of a down converter that receives a read signal from a qubit system.
FIG. 5 is a block diagram of a configuration of a clock distribution unit.
FIG. 6 is a schematic diagram illustrating synchronization between different signal processing units.
FIG. 7A is a schematic diagram illustrating an example in which signals are not synchronized in different channels between a logic device and a DAC/ADC module.
FIG. 7B is a schematic diagram illustrating signal synchronization in the different channels between the logic device and the DAC/ADC module.

### Description of Embodiments

Exemplary embodiments of the invention will be detailed below with reference to the drawings.

As an example of quantum computers, superconducting quantum computers that perform manipulation using microwaves will be discussed in the embodiments below, but the invention is applicable to various kinds of quantum computers as well, as described later.

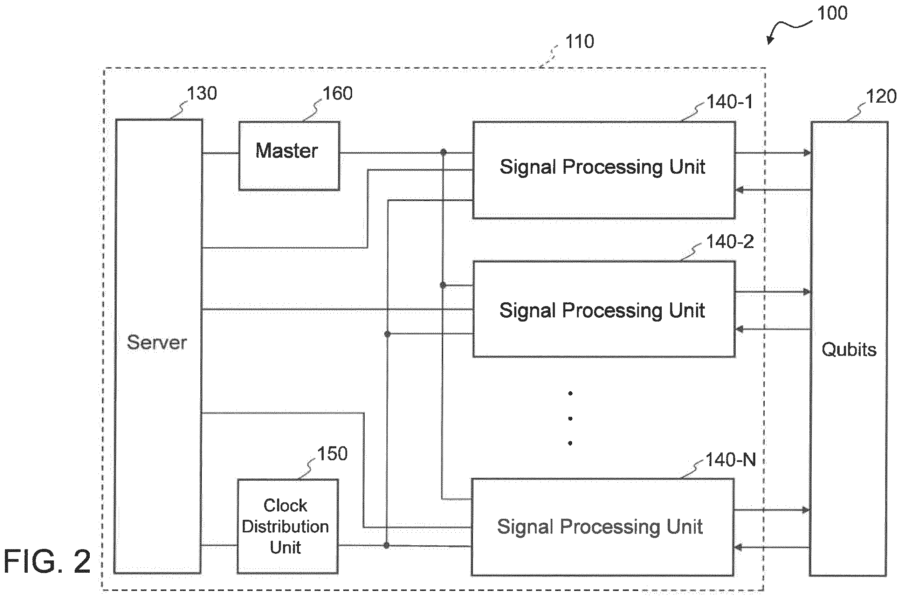

FIG. 2 shows a configuration of a quantum computer 100 according to the embodiments. The quantum computer 100 includes a controller 110 and a qubit system 120 having a plurality of qubits.

The controller 110 includes a server 130, a plurality of signal processing units 140-i (i = 1, 2, ..., N where N is an integer equal to or larger than 2), a clock distribution unit 150, and a master 160.

The server 130 is connected to each of the signal processing units 140-i, the clock distribution unit 150, and the master 160. The clock distribution unit 150 is connected to each of the signal processing units 140-i. The master 160 is also connected to each of the signal processing units 140-i. Each of the signal processing units 140-i is connected to the qubit system 120. The qubit system 120 is provided in a cryogenic refrigerator.

Upon receipt of an instruction input from a user, the server 130 calculates a waveform signal required for state manipulation of the qubits of the qubit system 120 or for readout from the qubit system 120, and outputs the waveform signal to each of the signal processing units 140-i. The server 130 reads input signals and analysis results from the signal processing units 140-i, and performs predetermined processing on them.

The clock distribution unit 150 distributes a common clock to the signal processing units 140-i. The master 160 distributes a common time to the signal processing units 140-i in accordance with a time synchronization protocol. The clock distribution by the clock distribution unit 150 and the time distribution by the master 160 will be detailed below.

The plurality of signal processing units 140-i are provided in different housings. Each of the signal processing units 140-i is designed by integrating the functions of the baseband circuits 40, the oscillation circuit 50, and the analog circuit 60 of the conventional quantum computer shown in FIG. 1 into a single unit, and generates, based on the waveform signal calculated by the server 130, a microwave signal (electromagnetic wave signal) with which the qubit system 120 is irradiated.

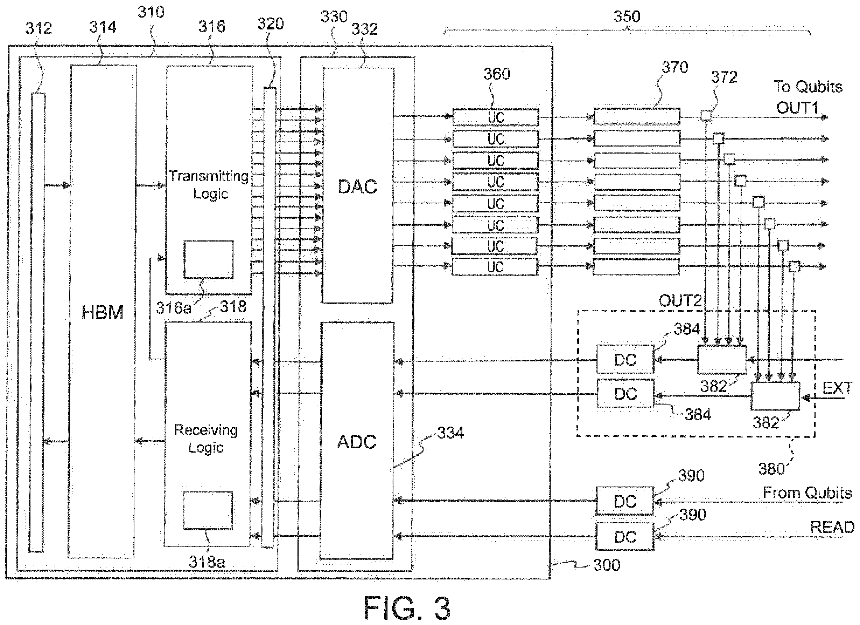

FIG. 3 shows a circuit configuration of each of the signal processing units 140-i. Each of the signal processing units 140-i includes a logic device 310, a DAC/ADC module 330, and a radio-frequency (RF) circuit 350. The logic device 310, the DAC/ADC module 330, and part of the RF circuit 350 (up converters 360 described below) are disposed on the same substrate 300.

The logic device 310 is a programmable logic device such as an FPGA, and performs digital signal processing on the waveform signal calculated by the server 130 to generate a baseband signal, and performs timing control. The logic device 310 includes an I/F 312, a high bandwidth memory (HBM) 314, a transmitting logic 316, a receiving logic 318, and an I/F 320.

The I/F 312 is an interface for connecting the logic device 310 to the server 130, the clock distribution unit 150, and the master 160.

The HBM 314 holds data on the waveform signal output from the server 130, and stores data written from the receiving logic 318. Having the HBM 314 on the logic device 310 allows high-density mounting, making it possible to process a huge amount of data in real time.

The transmitting logic 316 holds a parameter 316a related to transmission timing control, performs digital signal processing on the waveform signal held in the HBM 314 to generate a baseband signal, and transmits the baseband signal at a timing corresponding to the parameter 316a through the I/F 320 in accordance with a frame counter trigger described below. In the embodiments, a period between start and end of transmission of the baseband signal in accordance with the parameter 316a is defined as a data application cycle.

The receiving logic 318 holds a parameter 318a required for processing in the logic, and acquires and analyzes input signals from the RF circuit 350 in accordance with the parameter 318a. The input signals and the analysis results are written into the HBM 314.

The I/F 320 is an interface for connecting the logic device 310 to the DAC/ADC module 330. For example, the I/F 320 supports Peripheral Component Interconnect Express (PCIe (registered trademark)) which is an interface standard for personal computers (PCs), and allows highspeed data communications. Although the interface standard is typically used for connection to a general-purpose computer such as PC, the embodiments employ the interface standard for the connection to the DAC/ADC module 330. This requires no dedicated substrate, allowing components to be selected easily.

The DAC/ADC module 330 includes a digital-analog converter (DAC) unit 332 and an analog-digital converter (ADC) unit 334.

The DAC unit 332 generates an intermediate frequency (IF) signal from the baseband signal generated by the transmitting logic 316, performs digital-to-analog conversion on the IF signal, and outputs the resultant analog signal to the RF circuit 350. For example, the IF signal generated by the DAC unit 332 is a signal with a center frequency of 1 to 3 GHz and a bandwidth of 1 to 3 GHz.

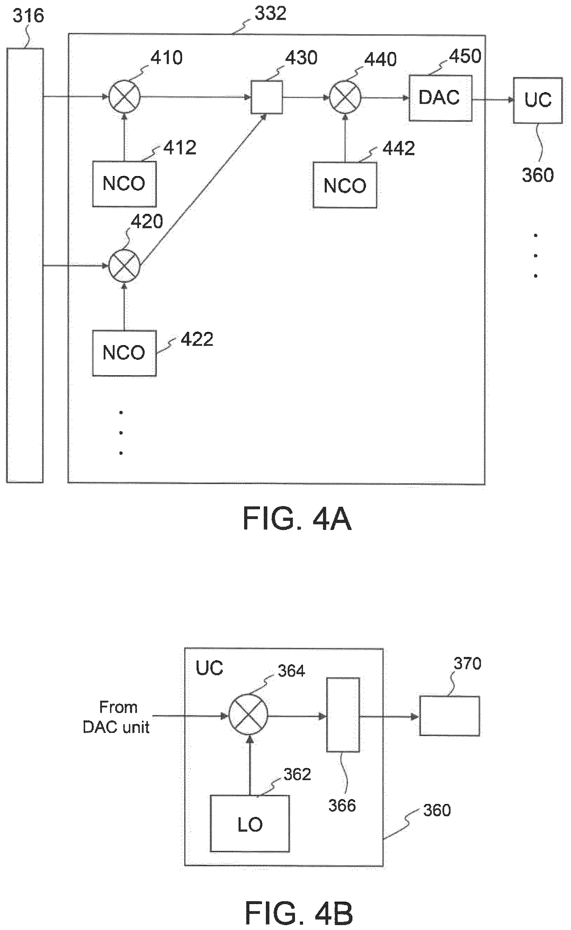

FIG. 4A shows a partial circuit configuration within the DAC unit 332. The circuit configuration shown in FIG. 4A illustrates an example of the circuit that generates one IF signal from two baseband signals (hereinafter referred to as first and second baseband signals). The DAC unit 332 includes mixers 410, 420, and 440, a combiner 430, numerically controlled oscillators (NCOs) 412, 422, and 442 that are digital oscillators, and a DAC 450. The NCOs 412, 422, and 442 all generate digital oscillation signals in a given frequency band (e.g., 1 to 3 GHz) as carrier waves, with their oscillation frequencies being different from one another.

The mixer 410 mixes and up-converts the first baseband signal input from the transmitting logic 316 and the oscillation signal from the NCO 412 to output a first mixed signal. The mixer 420 mixes and up-converts the second baseband signal input from the transmitting logic 316 and the oscillation signal from the NCO 422 to output a second mixed signal. The combiner 430 combines the first mixed signal from the mixer 410 and the second mixed signal from the mixer 420 to output a combined signal. The mixer 440 mixes and up-converts the combined signal from the combiner 430 and the oscillation signal from the NCO 442 to obtain an IF signal. The DAC 450 convers the IF signal output from the mixer 440 into an analog signal, and outputs the analog signal to the up converter 360 of the RF circuit 350.

For example, suppose that the frequency band supportable by the logic device 310 is 0 to 500 MHz, and that an IF signal with a center frequency of 3.2 GHz and a bandwidth of 1 GHz is generated. In this case, the oscillation frequencies of the NCOs 412, 422, and 442 are set to 1 GHz, 1.5 GHz, and 3.2 GHz, respectively. First, the first baseband signal with a bandwidth of 500 MHz input from the transmitting logic 316 and the oscillation signal from the NCO 412 are mixed and up-converted to generate the first mixed signal, and the second baseband signal with a bandwidth of 500 MHz input from the transmitting logic 316 and the oscillation signal from the NCO 422 are mixed and up-converted to generate the second mixed signal. The first and second mixed signals have the same bandwidth and different center frequencies. Then, the combiner 430 combines the first and second mixed signals to obtain the combined signal with a center frequency of 1.25 GHz and a bandwidth of 1 GHz. The combined signal and the oscillation signal from the NCO 442 are mixed and up-converted to obtain the IF signal with a center frequency of 3.2 GHz and a bandwidth of 1 GHz.

Unlike the mixing and combining by the conventional analog method, the mixing and combining of input signals are performed digitally by the mixers 410, 420, and 440, and the combiner 430 of the DAC unit 332, which makes it possible to enhance robustness and reproducibility compared to those with the analog method.

Although FIG. 4A shows a partial circuit configuration of the DAC unit 332, the DAC unit 332 actually has a plurality of circuits, each of which is the same as that in FIG. 4A, corresponding to the number of up converters 360 at the output stage. Furthermore, although FIG. 4A shows the circuit configuration for generating one IF signal from two baseband signals, the required number of baseband signals and the required number of NCOs vary in accordance with the bandwidth of the IF signal to be generated. For example, to generate an IF signal with a bandwidth of 3 GHz under the condition that the frequency band supportable by the logic device 310 is 0 to 500 MHz, six baseband signals with a bandwidth of 500 MHz are respectively mixed with oscillation signals from six NCOs with different oscillation frequencies. Thus, six mixed signals with the same bandwidth and different center frequencies are generated. By combining the six mixed signals, a combined signal with a bandwidth of 3 GHz is obtained. By further up-converting the combined signal to achieve a higher center frequency, it is possible to obtain an IF signal with a bandwidth of 3 GHz and a desired center frequency.

Referring back to FIG. 3, the ADC unit 334 converts an analog signal input from the RF circuit 350 into a digital signal, and outputs the resultant digital signal to the receiving logic 318 via the I/F 320.

Although FIG. 3 shows an example where the DAC unit 332 has eight output ports and the ADC unit 334 has four input ports, the number of output ports of the DAC unit 332 and the number of input ports of the ADC unit 334 are not restrictive. The DAC/ADC module 330 may include a plurality of DAC units (e.g., two DAC units each having four output ports) and a plurality of ADC units (e.g., two ADC units each having two input ports).

The RF circuit 350 includes a plurality of up converters 360, a plurality of filter/multiplier units 370, a plurality of dividers 372, a feedback circuit 380 having a plurality of down converters 384, and a plurality of down converters 390.

The plurality of up converters 360 are respectively connected to a plurality of output ports of the DAC unit 332. The plurality of filter/multiplier units 370 are respectively connected to the output stages of the plurality of up converters 360.

The output stages of the plurality of down converters 384 of the feedback circuit 380 and the output stages of the plurality of down converters 390 are respectively connected to the plurality of input ports of the ADC unit 334. For example, when the ADC unit 334 has four input ports, two of them are respectively connected to the output stages of the two down converters 384, and the remaining two input ports are respectively connected to the output stages of the two down converters 390.

As shown in FIG. 4B, each of the up converters 360 includes a local oscillator (LO) 362, a mixer 364, and a balun 366. The LO 362 is an analog oscillator that generates, as a carrier wave, an analog oscillation signal in a higher frequency band (e.g., 10 GHz band) than those of the NCOs described above. The mixer 364 is an analog mixer that mixes and up-converts the analog IF signal output from the DAC unit 332 and the oscillation signal from the LO 362 to output a radio-frequency signal (e.g., a signal with a center frequency of 10 GHz). The radio-frequency signal obtained by the mixer 364 is output via the balun 366. The oscillation signal from the LO 362 is also output to the down converters 384 and 390.

In the embodiments, to suppress crosstalk of RF outputs between neighboring channels, signal lines on the substrate 300 are designed to be differential lines. In particular, the differential lines are preferably employed for the output of the DAC unit 332, the output of the LO 362, the output of the mixer 364, and the input of the ADC unit 334. The balun 366 converts a differential signal from the mixer 364 into a single-ended signal. Some components of the RF circuit 350 that are provided outside the substrate 300 are of a single-ended type in most cases, and thus are recommended to be covered by a shield case. With such a configuration, an isolation between the channels (data lanes) can be guaranteed, and thus the crosstalk between the channels can be reduced.

Each of the filter/multiplier units 370 includes a multiplier that converts the radio-frequency signal output from the corresponding up converter 360 into a signal whose frequency is an integer multiple of the radio-frequency signal, and a filter that passes a signal within a specific frequency band, as well as an amplifier that amplifies signal levels, to output a microwave signal (an electromagnetic wave signal). The frequency bands of the signals obtained from the multiplier and the filter preferably differ among the channels.

The dividers 372 are respectively provided at the output stages of the filter/multiplier units 370. The microwave signal from the filter/multiplier unit 370 is divided into two signals (a first microwave signal OUT1 and a second microwave signal OUT2) by the divider 372. The first microwave signal OUT1 is emitted onto the qubits of the qubit system 120 through a cable, and the second microwave signal OUT2 is output to the feedback circuit 380.

As shown in FIG. 3, a single signal processing unit 140-i outputs a plurality of first microwave signals OUT1 to the qubit system 120. Some of the plurality of first microwave signals OUT1 are control signals for manipulating the states of the qubits, and the remaining first microwave signals OUT1 include a read pulse for reading the qubits and a pump pulse for amplifying the read signal. For example, when each of the signal processing units 140-i has eight output ports, the eight first microwave signals OUT1 may include six control signals for respectively manipulating the states of six qubits, one read pulse, and one pump pulse.

The feedback circuit 380 includes the plurality of down converters 384 and a plurality of switch/combining units 382 provided at the input stages of the down converters 384.

Each of the switch/combining units 382 receives some of the plurality of second microwave signals OUT2 output from the plurality of dividers 372, and an external signal EXT that is an output signal from another (adjacent) signal processing unit 140-j. In an example where there are eight second microwave signals OUT2 and the feedback circuit 380 includes two switch/combining units 382 as shown in FIG. 3, one of the switch/combining units 382 receives four of the eight second microwave signals OUT2 and one external signal EXT, and the other one of the switch/combining units 382 receives the remaining four second microwave signals OUT2 and one external signal EXT. The external signal EXT from the other signal processing unit 140-j is taken into the signal processing unit 140-i (i ≠ j) within a data application cycle.

Each of the switch/combining units 382 selects one or two or more input signals from the plurality of input signals (OUT2, EXT) by a switch in accordance with an instruction from the server 130. When one input signal is selected, the input signal is directly output to the corresponding down converter 384. When two or more input signals are selected, the input signals are combined, and the combined signal is output to the corresponding down converter 384. When the second microwave signal OUT2 is selected, the second microwave signal OUT2 is used for correcting the baseband signal as described below. On the other hand, when the external signal EXT from the other signal processing unit 140-j is selected, the external signal EXT is used for monitoring synchronization between different signal processing units 140-i and 140-j (i ≠ j).

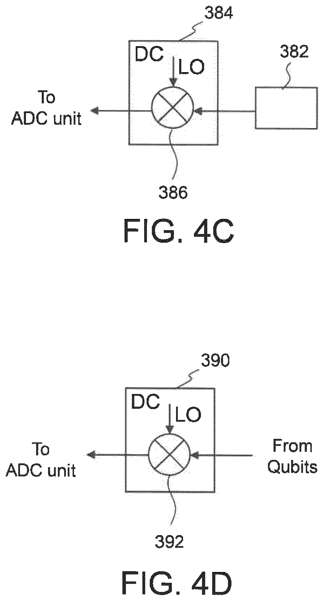

As shown in FIG. 4C, each of the down converters 384 includes a mixer 386. The oscillation signal from the LO 362 of the up converter 360 is also input to the mixer 386. The mixer 386 mixes the input signal from the corresponding switch/combining unit 382 and the oscillation signal from the LO 362, down-converts the mixed signal to a frequency supportable by the logic device 310, and outputs the resultant analog signal as a monitor signal to the ADC unit 334.

The ADC unit 334 converts the monitor signal output from the feedback circuit 380 into a digital signal, and outputs the resultant digital monitor signal to the receiving logic 318. The receiving logic 318 acquires and analyzes the received monitor signal, and writes the monitor signal and the analysis result into the HBM 314.

When the monitor signal corresponds to the second microwave signal OUT2, the receiving logic 318 calculates a difference between the monitor signal and the baseband signal output from the transmitting logic 316, and sets a correction parameter for eliminating the difference, as a parameter 316a for the transmitting logic 316. The transmitting logic 316 corrects, in accordance with the parameter 316a, the baseband signal generated from the waveform signal held in the HBM 314, and outputs the corrected baseband signal. With the automatic calibration based on the monitor signal as described above, it is possible to improve usability, and achieve high performance and high stability.

When the monitor signal corresponds to the external signal EXT input from the other signal processing unit 140-j to the signal processing unit 140-i (i ≠ j), the receiving logic 318 of the signal processing unit 140-i compares the monitor signal with a reference signal to analyze the synchronization between the different signal processing units 140-i and 140-j, and writes the analysis result into the HBM 314.

As shown in FIG. 4D, each of the down converters 390 of the RF circuit 350 includes a mixer 392. The oscillation signal from the LO 362 of the up converter 360 is also input to the mixer 392. The mixer 392 mixes the oscillation signal from the LO 362 and a signal READ read out from the qubits by irradiation with the read pulse and the pump pulse, down-converts the mixed signal to a frequency supportable by the logic device 310, and outputs the resultant analog signal to the ADC unit 334.

The ADC unit 334 convers the analog signal output from each of the down converters 390 into a digital signal, and outputs the resultant digital signal to the receiving logic 318. The receiving logic 318 acquires and analyzes the input signal from the ADC unit 334, and writes the input signal and the analysis result into the HBM 314.

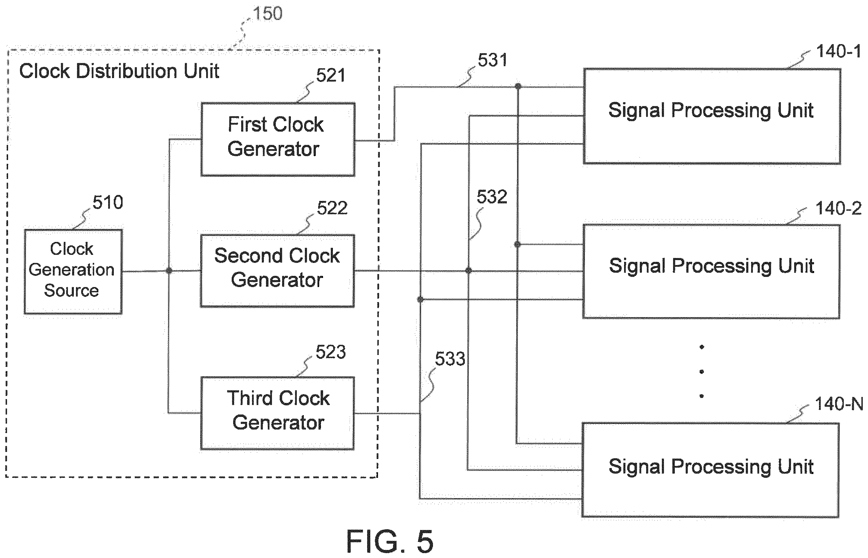

Next, the configuration of the clock distribution unit 150 will be described. As shown in FIG. 5, the clock distribution unit 150 includes a clock generation source 510, a first clock generator 521, a second clock generator 522, and a third clock generator 523. The clock generation source 510 generates a clock with a given frequency (e.g., 10 MHz). The clock generated by the clock generation source 510 is distributed into the first clock generator 521, the second clock generator 522, and the third clock generator 523.

Each of the first clock generator 521, the second clock generator 522, and the third clock generator 523 includes a phase-locked loop (PLL), a frequency divider circuit, and the like. The first clock generator 521, the second clock generator 522, and the third clock generator 523 generate a first clock, a second clock, and a third clock, respectively, having different frequencies from one another. The first clock, the second clock, and the third clock are distributed to all the signal processing units 140-1, 140-2, ..., and 140-N, through signal lines 531, 532, and 533, respectively.

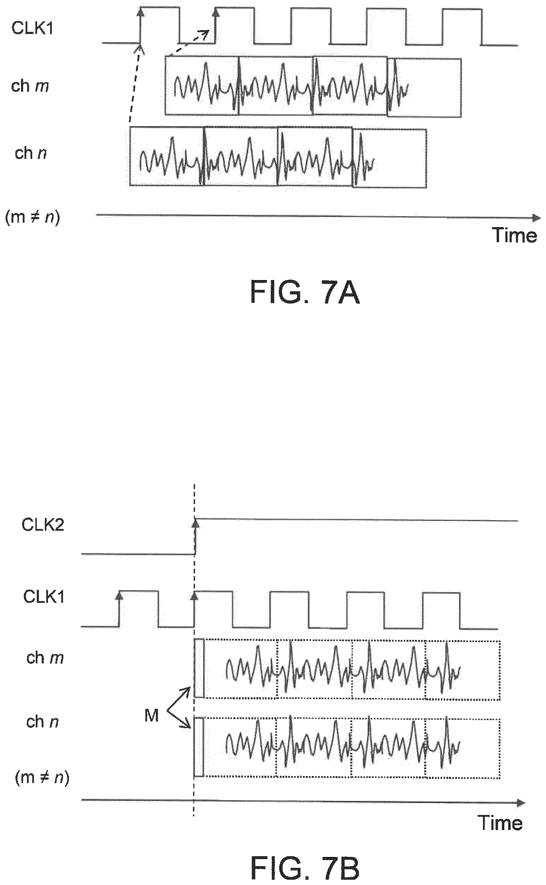

The first clock is a system operation clock with a first frequency (e.g., 125 MHz). The second clock is a clock with a second frequency (e.g., 62.5 kHz) having a longer period than the first clock, and is used for synchronization in different channels between the logic device 310 and the DAC/ADC module 330 (see FIG. 7B). The third clock is a reference clock with a third frequency (e.g., 100 MHz), on which the oscillation signals of the oscillators (NCOs, LO) described above are based.

The logic device 310 of each of the signal processing units 140-i generates, from the first clock, an operation clock with a higher frequency than the first clock. The DAC/ADC module 330 acquires or outputs a signal in accordance with the operation clock generated by the logic device 310. For example, the logic device 310 generates the operation clock with 250 MHz from the first clock with 125 MHz.

The oscillation signals from the NCOs 412, 422, and 442 shown in FIG. 4A and the oscillation signal from the LO 362 shown in FIG. 4B are generated based on the third clock, and the oscillation frequencies of these oscillators are variable depending on the individual differences and manufacturing variations of the qubits.

In the controller 110 of the embodiments, since the radio-frequency signals are separately generated by the signal processing units 140-i unlike the conventional controller 10 shown in FIG. 1, the whole of the controller 110 needs to be synchronized. Thus, in the embodiments, the following four synchronization methods I to IV are employed:
Synchronization method I: Synchronizing different signal processing units 140-i;
Synchronization method II: Synchronizing different channels between the logic device 310 and the DAC/ADC module 330;
Synchronization method III: Matching phases of an output signal between different data application cycles on the same channel; and
Synchronization method IV: Distributing a common time to all the signal processing units 140-i.

The synchronization methods will be detailed below.

### <Synchronization Method I>

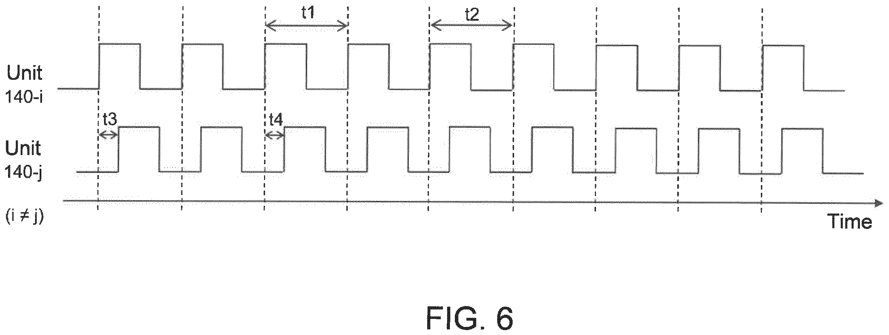

As shown in FIG. 5, the clock distribution unit 150 distributes the first clock, the second clock, and the third clock to all the signal processing units 140-1, 140-2, ..., and 140-N. In the synchronization method I, the first to third clocks are precisely generated and distributed in such a manner that, as shown in FIG. 6, the clock period in each of the signal processing units 140-i is kept to be constant (t1 = t2), and a difference in rising clock edges (phase difference) between the different signal processing units 140-i and 140-j (i ≠ j) is kept to be constant (t3 = t4).

The highly precise clock generation and distribution may be achieved by increasing the accuracy of the clock generation by the clock generation source 510, and maintaining a constant temperature of the clock distribution unit 150 and the signal lines 531, 532, and 533. For example, the constant temperature can be maintained by fixing the signal lines 531, 532, and 533 in place and using a Peltier constant temperature bath. Furthermore, a thermistor-based temperature compensation circuit may be employed to reduce an influence of temperature change on a phase change amount of the clock signal.

### <Synchronization Method II>

Next, the synchronization method II will be described with reference to FIGS. 7A and 7B. In FIGS. 7A and 7B, a high frequency operation clock generated by the logic device 310 from the first clock is denoted by CLK1, and a second clock with a second frequency is denoted by CLK2. For example, when the frequency of CLK1 is 250 MHz and the frequency of CLK2 is 62.5 kHz, CLK2 is a long-period clock with a period that is about 4000 times longer than CLK1.

The DAC/ADC module 330 acquires or transmits a signal in accordance with CLK1. As shown in FIG. 3, there are a plurality of channels between the logic device 310 and the DAC/ADC module 330, and the different channels have different signal transmission delays. A failure to synchronize the different channels leads to a time lag in signal acquisition between the channels. Suppose that a signal is acquired on rising edges of CLK1, for example, a situation may arise that a signal transmitting on a channel m is acquired one clock after a signal transmitting on a channel n (m ≠ n) is acquired, as shown in FIG. 7A.

In view of this, in the embodiments, the channels are synchronized in accordance with JESD204C, which is an interface standard between the logic device and the DAC/ADC. The synchronization defined in JESD204C uses a long-period clock (CLK2) referred to as SYSREF with a longer period than the operation clock (CLK1), and a local extended multiblock clock (LEMC). According to LEMC, 64 samples (32 tuples) are treated as a single frame, and a period of the single frame is 256 ns. In JESD204C, a head of the LEMC frame is matched with a rising edge of CLK2. As shown in FIG. 7B, the logic device 310 provides the baseband signal with a marker M (e.g., a flag of several bits) indicating the head for each frame (with a period of 256 ns), and periodically matches the marker M of the head with the rising edge of CLK2, thereby controlling transfer timing of the baseband signal between the logic device 310 and the DAC/ADC module 330. With this method, it is possible to match the heads between the channels with a period of 256 ns, which leads to reduction of difference in start time of transmitting/receiving the baseband signal and to suppression of variation between the different channels.

In FIGS. 7A and 7B, for the sake of simplicity, the period of the operation clock CLK1 is depicted to be longer than a vibration period of the baseband signal, but the actual period of the operation clock CLK1 is shorter than the vibration period of the baseband signal.

### <Synchronization Method III>

Next, the synchronization method III will be described with reference to FIGS. 4A and 4B. JESD204C defines when to output a signal as being once a frame (256 ns) of the LEMC. However, the NCOs 412, 422, and 442 of the DAC unit 332 and the LO 362 of the up converter 360 have different oscillation frequencies from one another, and the oscillation frequencies are variable depending on properties and manufacturing variations of the qubits, which may cause a phase shift of the output signal for each frame at the time of mixing by each mixer.

Specifically, let the period of a single frame of the LEMC is denoted by t (= 256 ns), and let the oscillation frequencies of the NCOs 412, 422, and 442, and the LO 362 be denoted by f₁, f₂, f₃, and f₄, respectively. An offset of 2πfᵢt mod 2π (i = 1, 2, 3, 4) is produced for each frame at the time of mixing by each mixer. When the offset values for all the oscillators are constant, no phase shift occurs, but the offset values may vary due to a difference in the oscillation frequencies among the oscillators. In an example where f₁ = 1 GHz, f₂ = 1.5 GHz, f₃ = 3.2 GHz, and f₄ = 10 GHz, the offset values per frame for the NCOs 412 and 422 and the LO 362 are zero, whereas the offset value per frame for the NCO 442 is 0.4π, leading to a phase shift of the output signal for each frame. As a result, the phase shift of the output signal occurs between different data application cycles.

To eliminate the phase shift between the different data application cycles in the embodiments, when to start the output of the baseband signal is controlled by grouping the LEMC frames. In the above-described example, the offset values for the NCO 442 in the first to fourth frames are 0.4π 0.8π, 1.2n, and 1.6π, respectively, whereas the offset values for all the oscillators in the fifth frame are zero. Therefore, five frames may be grouped into one group, and the output of the baseband signal may start once every five frames (256 ns × 5).

Let the number of frames in the mixing by the mixers 410, 420, 440, and 364 be denoted by n₁, n₂, n₃, and n₄, respectively (all of which are an integer that is equal to or larger than 1). The LEMC frames are grouped based on the number of frames n_{c} that is the least common multiple of the minimum integers n₁, n₂, n₃, and n₄ when 2πfᵢtnᵢ mod 2π = 0 or a constant value (i = 1, 2, 3, 4) is satisfied. The transmitting logic 316 includes a frame counter for counting the LEMC frames, and may cause the output of the baseband signal to start once every n_{c} frames in accordance with a frame counter trigger. By determining when to start the output of the baseband signal depending on the oscillation frequencies of the oscillators, the phases of the output signal are matched between the different data application cycles, and thus the qubit state manipulation or readout from the qubits can be performed highly accurately.

### <Synchronization Method IV>

In the synchronization method IV, the master 160 distributes the common time to all the signal processing units 140-i in accordance with the time synchronization protocol and designates the start time of the signal processing. Examples of the time synchronization protocol include IEEE1588. Here, taking the above-described LEMC frame into consideration, a gap in the start time of data transmission to the signal processing units 140-i is preferably less than 256 ns. Since data transfer is carried out in the logic device 310 including various logics with different operation frequencies, the gap is more preferably less than 200 ns taking Clock Domain Crossing (CDC) into consideration. According to IEEE1588, a 10-Gbit Ethernet is used for the connection between the master 160 and each of the signal processing units 140-i, and the reference clock for data transmission is set to 156.25 MHz (= period of 6.4 ns). That is, the gap is preferably less than 200 ns/6.4 ns ≈ 30 cycles. By distributing the common time to all the signal processing units 140-i, it is possible to reduce the gap in the start time in the data application cycle between the plurality of signal processing units 140-i.

As described above, the controller 110 of the quantum computer 100 according to the embodiments includes the plurality of signal processing units 140-i. Each of the signal processing units 140-i is designed by integrating the functions of the logic device, the DAC/ADC, the oscillation circuit, the mixer, and the like of the conventional quantum computer into a single unit. With this configuration, the calibration can be performed for each of the signal processing units 140-i, which leads to improving usability. Furthermore, it is easy to adapt to an increase in qubits of the qubit system 120, thereby improving scalability. Furthermore, the controller 110 as a whole can be compact in size. The mixing and combining of the baseband signal are performed digitally, which makes it possible to enhance robustness and reproducibility.

The invention is not limited to the above-described embodiments, and various modifications can be made without departing from the scope of the invention. Other embodiments and variations made by those skilled in the art are intended to be embraced within the scope of the invention.

For example, instead of the programmable logic device such as FPGA, an application specific integrated circuit (ASIC) or other such logic devices may be employed as the logic device 310.

The invention is believed to be applicable to control for various quantum computers in addition to superconducting quantum computers, such as a semiconductor quantum dot based quantum computer that allows manipulation using microwaves, a quantum computer in a cold atomic gas system that allows manipulation using microwaves, a quantum computer that allows electron spins to be arranged using molecular technology or nanotechnology, and a quantum computer that allows manipulation using electromagnetic waves other than microwaves. The invention is also believed to be applicable to control for a quantum simulator, a quantum sensor, and a quantum repeater using qubits manipulated by microwaves.

### Reference Sign List

- 100:: quantum computer
- 110:: controller
- 120:: qubit system
- 130:: server
- 140-1, 140-2, ...,140-N:: signal processing unit
- 150:: clock distribution unit
- 160:: master
- 310:: logic device
- 312, 320:: I/F
- 314:: HBM
- 316:: transmitting logic
- 318:: receiving logic
- 330:: DAC/ADC module
- 332:: DAC unit
- 334:: ADC unit
- 350:: RF circuit
- 360:: up converter
- 362:: LO
- 364:: mixer
- 366:: balun
- 372:: divider
- 380:: feedback circuit
- 384,: 390: down converter
- 410, 420, 440:: mixer
- 412, 422, 442:: NCO
- 430:: combiner
- 450:: DAC
- 510:: clock generation source
- 521:: first clock generator
- 522:: second clock generator
- 523:: third clock generator

## Claims

1. A quantum computer controller, comprising:
a server configured to calculate a waveform signal for manipulation of a qubit system having a plurality of qubits or for readout from the qubit system; and
a plurality of signal processing units each configured to generate, based on the waveform signal, an electromagnetic wave signal with which the qubit system is irradiated, each of the plurality of signal processing units comprising:
a logic device configured to perform digital signal processing on the waveform signal to generate a baseband signal;
one or a plurality of digital oscillators each configured to generate a digital oscillation signal in a given frequency band;
one or a plurality of mixers each configured to mix and up-convert the baseband signal and the digital oscillation signal to output one or a plurality of mixed signals;
a digital-analog converter configured to perform a digital-analog conversion on the one or the plurality of mixed signals to obtain an analog signal;
a radio-frequency circuit configured to generate the electromagnetic wave signal from the analog signal; and
an analog-digital converter configured to perform an analog-digital conversion on an input signal from the radio-frequency circuit to obtain a digital signal.

2. The quantum computer controller according to claim 1, wherein
the radio-frequency circuit comprises:
a divider configured to divide the electromagnetic wave signal into a first electromagnetic wave signal for outputting to the qubit system and a second electromagnetic wave signal for feedback; and
a feedback circuit configured to down-convert the second electromagnetic wave signal and output a resultant signal as a monitor signal, wherein
the analog-digital converter is configured to perform the analog-digital conversion on the monitor signal and output a digital monitor signal, and
the logic device is configured to correct the baseband signal based on the digital monitor signal.

3. The quantum computer controller according to claim 1 or 2, wherein
the plurality of digital oscillators have different oscillation frequencies from one another,
the plurality of mixers are configured to output the plurality of mixed signals with different center frequencies,
each of the plurality of signal processing units further comprises a combiner configured to combine the plurality of mixed signals to generate a combined signal with a bandwidth wider than that of the baseband signal, and
the digital-analog converter is configured to perform the digital-analog conversion on the combined signal.

4. The quantum computer controller according to claim 3, wherein
at least the plurality of mixers, the plurality of digital oscillators, the combiner, the digital-analog converter, and the analog-digital converter are integrated into a single module.

5. The quantum computer controller according to claim 4, further comprising a clock distribution unit configured to generate a plurality of clocks with different frequencies from one another under a constant temperature, and distribute the plurality of clocks to each of the plurality of signal processing units, wherein
the plurality of clocks include at least an operation clock for operating the plurality of signal processing units and a reference clock for generating digital oscillation signals of the plurality of digital oscillators.

6. The quantum computer controller according to claim 5, wherein
the plurality of clocks further include a long-period clock with a period longer than that of the operation clock, and
the logic device is configured to provide the baseband signal with a head in a specific period that is defined in a local extended multiblock clock, and periodically match the head with the long-period clock, thereby controlling transfer timing of the baseband signal between the logic device and the single module.

7. The quantum computer controller according to claim 6, wherein
based on the specific period defined in the local extended multiblock clock and the oscillation frequencies of the plurality of digital oscillators, the logic device is configured to determine when to start an output of the baseband signal to the single module.

8. The quantum computer controller according to any one of claims 1 to 7, further comprising a master configured to distribute a common time to the plurality of signal processing units in accordance with a time synchronization protocol.

9. The quantum computer controller according to any one of claims 4 to 7, wherein
the logic device comprises an interface that supports an interface standard for connecting to a general-purpose computer, as an interface for connecting to the single module.

10. The quantum computer controller according to any one of claims 1 to 9, wherein
the radio-frequency circuit comprises an up converter comprising:
an analog oscillator configured to generate an analog oscillation signal in a higher frequency band than those of the one or the plurality of digital oscillators; and
an analog mixer configured to mix and up-convert the analog oscillation signal and the analog signal output from the digital-analog converter.

11. The quantum computer controller according to claim 10, wherein
at least an output of the digital-analog converter, an output of the analog oscillator, an output of the analog mixer, and an input of the analog-digital converter are designed to be differential lines, and
the up converter further comprises a balun configured to convert an output signal from the analog mixer into a single-ended signal and output the single-ended signal as the electromagnetic wave signal.

12. The quantum computer controller according to any one of claims 1 to 11, wherein
at least a part of the radio-frequency circuit is covered by a shield case.

13. The quantum computer controller according to any one of claims 1 to 12, wherein
the logic device comprises a high bandwidth memory configured to hold data of the waveform signal calculated by the server.
